# EUROPEAN PATENT APPLICATION

(11) **EP 0 990 511 A2**
(43) Date of publication of application: **05.04.2000**
(21) Application number: 99307719.7
(22) Date of filing: 30.09.1999
(51) Int. Cl.: B32B 7/06, B65D 77/10

(54) **Directionally peelable closures and articles using the same**

(30) Priority: 30.09.1998 US 102528 P
(71) Applicant: AVERY DENNISON CORPORATION, Pasadena California 91103 (US)
(72) Inventor: Wisniewski, Mark, Mentor, Ohio 44060 (US); Freedman, Melvin S., Beachwood, Ohio 44122 (US)
(74) Representative: Mallalieu, Catherine Louise

(57) **Abstract**

This invention relates a closure with a directionally peelable opening feature for articles comprising first and second layer of different polymeric films, wherein each layer has an upper and lower surface, the upper surface of the first layer is peelably attached to the lower surface of the second layer at a separation interface, provided that when the closure is used to secure an article, at least one portion of the surface and of the upper surface of the first layer or the lower surface of the second layer is not attached to the container. The invention also relates to a container sealed with the directionally peelable closure. The closure provides a means for providing a strong sealing closure that is directionally peelable requiring little effort. In another aspect the invention provides a means for using a container more than once.

In another aspect the invention provides a non-destructible opening feature for the container. This allows the container to be reused multiple times reducing overall packaging costs and providing environmental benefits. Key to this invention is that the incremental cost of achieving this reusability feature over the cost of a one use container is low. This is important because the cost of adding this feature to all packages must be balanced against the savings in total packaging costs when a consumer uses the container a second time. It is important to note that consumer second use of containers is voluntary and will not be 100%. The lower this incremental cost is the lower the % of voluntary package reuse by consumers can be. Historically in the U.S. overnight couriers have provided these envelopes, boxes, etc. free of charge to their customers.

In another aspect the invention is self contained relative to its easy open feature. The tight registration of the pressure sensitive coating is accomplished when the tape is manufactured. As a result of this the registration for dispensing the tape onto the box or envelope is not critical. Additionally, the number of tapes being dispensed is reduced because the tear tape is eliminated. This makes it more commercially feasible to dispense the tape in line with other manufacturing operations in container manufacturing.

In another aspect, the invention provides tamper evident and non resealable closure for packages. The inherently separable interface used in this invention cannot be reclosed once it is opened. The individual film layers can be pigmented etc. to further provide visible tamper evidency.

## Description

### Technical Field of the Invention

This invention relates to closures and articles using the same. More specifically, the invention relates to a closure with a directionally peelable opening feature and uses of the same to seal articles.

### Background of the Invention

In packaging applications, the package seal must be strong enough to survive the forces associated with container production and transportation. Additionally the seal must be strong enough to withstand the force of the contents of the article pushing on the seal. The seals must have a strength sufficient to prevent rupture of the seal such that a high percentage of the filled packages will survive shipping and handling. To test this strength a wide variety of tests ranging from dropping the filled package from a given height to inflating the package and measuring its burst pressure are used. Another common test is to use a load cell to measure the force needed to tear through the seal. If the sealing surfaces of the materials peel apart, the seal is said to be peelable. Examples of peelable seals are lidding materials used to seal to the tops of thermoformed trays for yogurt etc. If the walls or sides of the package tear before the seal peels then the seal is said to be destructible in strength or a permanent seal. Examples of destructible or permanent seals are mailing envelopes which require a letter opener to open them.

Applications that use peelable seal technology are limited to those where the peelable seal does not need to have a high degree of strength and where an easy open feature is desirable. This limitation arises from the fact that current technologies used for making a peelable seal result in a seal that opens with the essentially the same applied force regardless if that force is applied by the contents pressing on the seal from inside the package or from the user pulling on the opening tab from outside the package. If the force required to open the seal from inside the package is substantially greater, preferably destructible, and the force needed to open the package from the outside is lower, preferably, in the range that is easy for a person to open using only minimal applied force, then the seal would be said to be directionally peelable or peelable only in the desired direction.

Obtaining the correct balance between having a strong seal that will survive shipping and handling and having one that is easy to open becomes more difficult as the forces applied by the contents increase. For this reason peelable seals typically are not found in packaging applications where a strong closure strength is required to protect the package contents from accidental spillage. One problem with over strong packaging is the difficulty that elderly, young and physically challenged people have opening such packaging. This concern has received a significant amount of attention in recent years as companies seek to reduce packaging costs, but not performance, and the population of the US has aged.

One alternative to using peelable seals is to separate the closure mechanism from the opening mechanism. An example of this is found in over night delivery envelopes and boxes. These applications use a permanent closure tape to seal the envelope and a reinforced tear strip to open the package. These systems have worked well for many years, but they have the obvious disadvantages of cost and manufacturing complexity. The dispensing of tear strips must be done in tight registration to the container perforations and geometry or it will not function correctly. As a result the tear strip application is a major cause of scrap and rework and usually occurs in a separate manufacturing step.

In addition in recent years it has become desirable in some applications to have an envelope or package that can be reused. Examples where this is useful are legal documents that must be signed and returned to the originator. In a two use application the use of a tear strip is not desirable because it destroys the flap of the envelope resulting in a poor appearance and a weaker package.

It is desirable to have a means to seal the courier packaging during transport and be easily opened. It is desired to have such seal without the need for an additional opening means such as a tear strip or additional manufacturing steps. There is environmental and cost benefit to reducing the manufacture steps and the materials used in making the courier containers and to having the containers be usable multiple times.

It is also desirable that such seals are tamper evident and non resealable after opening. Items shipped via overnight couriers are usually high value and elaborate anti-theft features are often incorporated into the design of the packaging and systems for delivery of packages.

### Summary of the Invention

This invention relates a closure with a directionally peelable opening feature for articles comprising first and second layer of different polymeric films, wherein each layer has an upper and lower surface, the upper surface of the first layer is peelably attached to the lower surface of the second layer at a separation interface, provided that when the closure is used to secure an article, at least one portion of the surface and of the upper surface of the first layer or the lower surface of the second layer is not attached to the container. The invention also relates to a container sealed with the directionally peelable closure. The closure provides a means for providing a strong sealing closure that is directionally peelable requiring little effort to open it. In another aspect the invention provides a means for using a container more than once.

In another aspect the invention provides a non-destructible opening feature for the container. This allows the container to be reused multiple times reducing overall packaging costs and providing environmental benefits. Key to this invention is that the incremental cost of achieving this reusability feature over the cost of a one use container is low. This is important because the cost of adding this feature to all packages must be balanced against the savings in total packaging costs when a consumer uses the container a second time. It is important to note that consumer second use of containers is voluntary and will not be 100%. The lower this incremental cost is the lower the percentage of voluntary package reuse by consumers can be. Historically in the U.S. overnight couriers have provided these envelopes, boxes, etc. free of charge to their customers.

In another aspect the invention is self contained relative to its easy open feature. The tight registration of the pressure sensitive coating is accomplished when the tape is manufactured. As a result of this the registration for dispensing the tape onto the box or envelope is not critical. Additionally, the number of tapes being dispensed is reduced because the tear tape is eliminated. This makes it more commercially feasible to dispense the tape in line with other manufacturing operations in container manufacturing.

In another aspect, the invention provides tamper evident and non resealable closure for packages. The inherently separable interface used in this invention cannot be reclosed once it is opened. The individual film layers can be pigmented etc. to further provide visible tamper evidency.

### Brief Description of the Drawings

In the drawings,
Fig. 1 is a cross sectional view of the closure.
Fig. 2 is a cross sectional view of the closure.
Fig. 3 is a cross sectional view of the closure.
Fig. 4 is a top view of the closure.
Fig. 5 is a cross sectional view of a closure on the flap of a container such as an envelope or box.
Fig. 6 is a cross sectional view of a sealed container and the closure.
Fig. 7 is a cross sectional view of a bag sealed with the closure.
Fig. 8 is a cross sectional view of a container with lid that is sealed with the closure.

### Detailed Description of the Preferred Embodiments

One feature of the closure is the separation interface between the first and second layers of the peelable closure. The term "separation interface" refers to the interface between the first and second polymeric films of the closure. The films are peelably attached to each other and present to each other surfaces of different composition. The films adhere to each other to a sufficiently high degree to withstand the maximum separation forces imposed as the closures are processed and during transportation and storage of articles using the closures. However, the films adhere to each other to a sufficiently low degree to allow them to be cleanly and readily separated from each other under the imposition of stripping or separation forces greater than the maximum separation forces to which they have been exposed during closure preparation. The separation interface has also been referred to as a "peelable interface" in U.S. Patent 4,925,714, issued to Freedman, the disclosure of which is incorporated by reference. The separation peel strength at the separation interface is a function of several parameters, including, among others, the identities of the two dissimilar polymeric layers, the presence and types of additives in one or both of the coextruded films, the presence or absence of pigments in one or both films, and the process conditions under which the film is manufactured. The separation interface typically has a peel strength in the range of less than about 400, or from about 30 to about 200, or from about 50 to about 175 grams per 2-inch width at 90E peel. In one embodiment, the separation interface typically has a peel strength in the range of less than about 400, or from about 30 to about 200, or from about 50 to about 175 grams per 1-inch width at 90E peel.

The term "directionally peelable" in this invention is defined as the forces to start the peel are not equal when the forces are applied from different directions. For instance, the force to start the peel at the separation interface is lower than the force needed to start the peel at points distant from the separation interface.

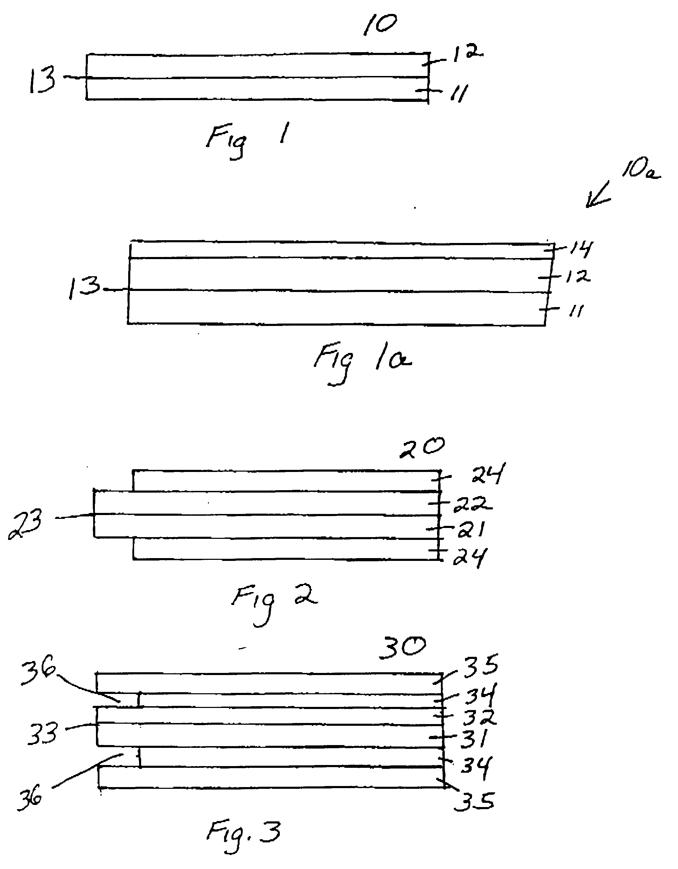

The embodiments of the invention are further illustrated in Figs. 1-8. In Fig. 1, a peelable closure 10 comprises a first layer 11 and a second layer 12. The upper surface of first layer 11 is peelably attached to the lower surface of second layer 12 at separation interface 13. Generally, the first layer has a thickness from about 0.1 to about 5, or from about 0.3 to about 3 or from about 0.5 to about 2.5, or from about 0.6 to about 2 mils. The second layer generally has a thickness from about 0.5 to about 5, or from about 0.7 to about 4, or from about 1 to about 3 mils. In one embodiment, the second layer is thicker than the first layer.

Layers 11 and 12 may be any coextruded dissimilar polymer films which form the separation interface described above. The term dissimilar polymer films is known to those skilled in the art of coextrusion as films that when coextruded together have low affinity for each other. The films may be oriented or non-oriented. When oriented, machine direction, uniaxially oriented films are preferred. The films may be pigmented or un-pigmented. The films may be formed from polyolefins, styrenes, polyvinyl halides such as polyvinyl chloride, polyurethanes, polyacrylics, etc. These materials are selected so that the above described separation interface is formed. The polyolefins are described below. The styrenes include low, medium and high impact polystyrene crystal polystyrene, acrylonitrile butadiene styrene resins, and styrene block polymers.

In one embodiment, layer 11 may be formed from a polyolefin, such as those described below and layer 12 may be formed from a styrene, including low, medium and high impact polystyrene crystal polystyrene, acrylonitrile butadiene styrene resins, and styrene block polymers, vinyl polymers, such as rigid or flexible polyvinyl chlorides, polyurethanes, acrylic polymers, and nylons, such as Nylon 6.

In one embodiment, each layer generally is independently derived from at least one polyolefin. The polyolefin may be a homo or interpolymer, e.g. a copolymer or terpolymer, of olefins containing from 2 to about 30, or from about 2 to about 12, or from about 2 to about 6 carbon atoms. In one embodiment, layers 11 and 12 are independently composed of polyethylene, polypropylene, polybutylene, polyethylene copolymers and terpolymers and polypropylene copolymers and terpolymers, and mixtures or two or more thereof. The polyethylene and polypropylene copolymers and terpolymers are interpolymers of ethylene or propylene together with one or more olefin monomers having from about 2 to about 12, or from about 2 to about 6 carbon atoms. Examples of the other monomers include ethylene, propylene, butene, hexene, etc. Typically the other monomer is present in an amount from about 3% up to about 20%, or from about 5% to about 19%, or from about 8% to about 18%. Preferred other monomers are ethylene and 1-butene for propylene and propylene and 1-butene for ethylene. Typically these polymers have a melt index of about 2 to about 4 g/10 min. or a number average molecular weight of about 150,000 to about 500,000. Examples of propylene copolymers include CEFOR™ resin SRD4-105 which contains 14% by weight comonomer. Other resins include polypropylene random copolymers 6C44 (5.5% ethylene), DS6D81 (5.7% ethylene), and DS6D82 (5.7% ethylene). The CEFOR™ and random polypropylene polymers are available commercially from Union Carbide Company. Preferably layer 11 and 12 are polyethylene and polypropylene, respectively. In another embodiment, layers 11 and 12 are polypropylene and polyethylene, respectively.

By way of example, a good separation interface may be formed by coextruding a polypropylene homopolymer, such as Union Carbide's 5A97 polypropylene and a blend of low density polyethylene such as Huntsman PE1017 low density polyethylene and Lyondell M6060 high density polyethylene. The blend of low to high density polyethylene is typically in a ratio of about (9-1.5:1) or about (8-2:1), or about 4:1).

In another embodiment, closure may be prepared by extruding three of more layer of which there is a separation interface. For instance, the first layer may have one or more additional layers which are ever coextruded with the first and second layer or which is laminated to the first layer. In reference to Fig 10a, a peelable closure 10a comprises a first layer 11 and a second layer 12. The upper surface of first layer 11 is peelably attached to the lower surface of second layer 12 at separation interface 13. First layer 10 is also adhered to additional (e.g. a printable layer) layer 14. The second layer may also have one or more additional layers which could be coextruded or laminated. Additionally, both the first and second layer may have one or more additional layer. These additional layers may be prepared from one or more of the materials used to make the first or second layers. Additionally the additional layers may contained other polymers which improve properties such as the adhesive of the bonding material to first of second layer. The additives may also be antistatic, antioxidation and processing agents. In one embodiment, the additives are present to improve printabililty. The additional layers may be tie layers to improve adhesion of the first or second film to the additional layers. In one embodiment, the additional additive is an ethylene vinyl acetate resin. The ethylene vinylacetate is generally present in an amount from about 20% to about 80%, or from about 25% to about 75%, or from about 40% to about 60% by weight. These additional layers typically has a thickness of about 0.1 to about 2, or from about 0.2 to about 1, or from about 0.3 to about 0.6 mil.

In Fig. 2, the closure 20 is comprised of a first layer 21 peelably attached to second layer 22 at separation interface 23. On each of the surfaces 21 and 22 are independently materials capable of bonding the closure of a container. The bonding material 24 may be an adhesive, such as a pressure sensitive or a material capable of forming a heat seal. The pressure sensitive adhesives may be of any suitable type, including hot melt, emulsion, or solvent based types. The selection of the bonding material depends on the application of the closure. For instance, if the closure is sealing a heavy container, a stronger bonding material may be selected.

The adhesive may be applied by techniques known to those in the art. A standard melt coater may be used to apply the bonding material. Other adhesives and coating techniques can also be used to make this tape. Hot melts can be coated off heated rolls. Adhesive stripes are produced with patterned transfer rolls or by pattemed scrapper (doctor) blades. Solvent or emulsion based adhesives are also coated off rolls or through dies. Machine direction patterns are created in the same ways. Any adhesive and coating technique which produces a narrow strip should be satisfactory for this application.

In one embodiment, the bonding material 24 is a pressure-sensitive adhesive such as those utilized commercially for closure construction. The pressure sensitive adhesives may be acrylate or methacrylate ester based or polyolefin based pressure sensitive adhesives. An example of a useful pressure sensitive adhesive is available commercially from H.B. Fuller of Blue Ash, Ohio under product number HM727 (a blend of ethylene-vinyl acetate copolymer, polyethylene waxes and a tackifier). In one embodiment, the adhesive layer is in contact with a release liner.

In another embodiment, the bonding material 24 is a hot melt adhesive. Any hot melt adhesive may be used. The pressure-sensitive adhesive used for the adhesive may be a hot-melt material that can be rubber or acrylic based. Preferred adhesives exhibit an adhesive force of about 15 to about 50 ounces per inch (about 170 to about 560 grams per centimeter) of adhesive width in the 180° peel adhesive test of the P.S.T.C. test #1, with a 20 minute dwell time. More preferably, the adhesive force is about 20 to about 45 ounces per inch (about 220 to about 450 grams per centimeter).

The adhesive force of a given adhesive can also be altered to provide the desired adhesion by the inclusion of commercially available modifiers. Exemplary modifiers include the acrylic resin sold under the trademarks ACRYLOID B-67 by Rohm and Haas, PICCOTEX LC modifying resin sold by Hercules, Inc. and TRITON X-15 (ethylene glycol octyl phenyl ether) sold by Rohm and Haas.

Useful acrylic pressure-sensitive adhesives are typically relatively low molecular weight copolymers as are made by bulk polymerization in the presence of chain terminating agents, as compared to the relatively high molecular weight copolymers prepared from the same monomers by emulsion polymerization techniques. Exemplary monomers useful in forming pressure-sensitive acrylic adhesives include but are not limited to acrylic and methacrylic acids, 2-ethylhexyl acrylate, butyl acrylate, methyl acrylate, methyl methacrylate, vinyl acetate, N-vinyl pyrrolidone, 2-hydroxyethyl acrylate, and the like.

One particularly useful material is the acrylic-based polymer sold under the trademark Experimental Resin QR-667 by Rohm and Haas. That material is reported by its manufacturer as being a clear solid having a glass transition temperature of -40°C and a melt viscosity of 350°F and 25,000-35,000 centipoises at 10 revolutions per minute.

Hot melts include styrene-butadiene-styrene and styrene-isoprene-styrene block copolymers that are combined with a hydrocarbon resin or resin ester as are disclosed in U.S. Patent No. 4,080,348, to Korpman. Additional hot-melt pressure-sensitive adhesives are disclosed in U.S. Patent Nos. 3,281,383; 3,519,585; 3,676,202; 3,723,170 and 3,787,531.

In one embodiment, styrene rubber based hot melt adhesives may be used. The adhesive may be styrene-butadiene (SB), styrene-isoprene (SI), styrene-isoprene-styrene (SIS), styrene butadiene styrene (SBS), styrene ethylene butylene (SEBS) resin based hot melt adhesives. The resins include block copolymers such as diblock, triblock, random and star polymers. Typically the hot melt is a Kraton based hot melt adhesive. Kraton elastomers are available from Shell Chemical. KRATON Polymers and compounds with an unsaturated rubber midblock constitute the KRATON D series (styrene-butadiene-styrene, (SBS) and styrene-isoprene-styrene, (SIS) while those with a saturated midblock make up the KRATON G series (styrene-ethylene/butylene-styrene, SEBS and styrene-ethylene/propylene-styrene, SEPS). In one embodiment, the adhesive is a styrene-isoprene-styrene based adhesive. Examples of these polymers are Kraton™ D-1107 and D-1111 available from Shell Chemical.

In another embodiment, the bonding material is a heat seal material. The heat sealable polymers may be a polyolefin, like one of those described above, or the heat sealable polymer may include but are not limited to polyethylene methyl acrylate, polyethylene ethyl acrylate, polymethyl methacrylates, acrylonitrile butadiene styrene polymer, nylon, polybutylene, polystyrene, polyurethane, polysulfone, polyvinylidene chloride, polypropylene, polypropylene copolymers, polycarbonate, polymethylpentene, styrene maleic anhydride polymer, styrene acrylonitrile polymer, ionomers based on sodium or zinc salts of ethylene/methylacrylic, cellulosics, fluoroplastics, polyacrylonitriles, and thermoplastic polyesters. In one embodiment, the heat sealable layer is a polypropylene copolymer as described above.

The following example illustrates a peelable closure of the present invention.

### Example 1

A three layer coextruded peelable film is manufactured in a cast sheet operation which is in line stretched in the machine direction to produce a four mil film of the following composition.

| **Print Skin** | |
|---|---|
| Union Carbide 5A97, 4MF, | 50% |
| Homopolypropylene | |
| Equistar UE 631-04, Ethylvinylacetate | 50% |
| Layer Thickness (mils) | 0.5 |

| **White Peelable layer** | |
|---|---|
| Union Carbide 5A97, 4MF, Homoplypropylene | 70% |
| Schulman Polybatch P8555-SD, Titanium dioxide concentrate in Homopolypropylene carrier (previously dried at 225 F for 4 hours) | 30% |
| Layer Thickness (mils) | 2-0 |

| **Clear Peelable Layer** | |
|---|---|
| Huntsman PE1017 Low density polyethylene | 80% |
| Lyondell M6060 High density polyethylene | 20% |
| Layer Thickness (mils) | 1.5 |

The extruder barrel zones are set at the following temperatures.

| | Print Layer | White Layer | Clear Layer |
|---|---|---|---|
| Zone 1 | 350 F | 385 F | 350 F |
| Zone 2 | 385 F | 400 F | 385 F |
| Zone3 | 410 F | 410 F | 410 F |
| Zone4 | 420 F | 420 F | 420 F |
| Zone5 | 425 F | 425 F | 425 F |
| Zone6 | 430 F | 430 F | 430 F |
| Zone7 | N/A | 440 F | N/A |
| Zone8 | N/A | 450 F | N/A |

A combining block is used to combine the melt streams and was set to 425 F. A flat single manifold die is used to profile the sheet. The die is gapped to approximately 60 thousands of an inch and set to 430 F on all die body heater zones. The final sheet thickness is between 18 and 20 mils. The melt curtain is cast horizontally and pinned to a matte chill roll with an air knife. The sheet is then in-line oriented in the machine direction in a single stage stretching operation to at least 2:1, preferably 5:1, optionally as high as 20:1 using contact heated rolls and nips at varying temperatures and speeds as known in the art of oriented film manufacturing and then subsequently annealed. The film is finally corona treated to and trimmed to its final width before being wound up. The adhesive coating is done on a hot melt machine equipped with a die coater using a standard hot melt pressure sensitive permanent adhesive. An example of such adhesives are styrene rubber based hot melt adhesives sold by Shell Chemical under the trade name of Kraton. The melted adhesive is forced through a filter screen before exiting the die. A metering pump provides a precise flow of adhesive to control the coat weight. The adhesive is deposited on a paper with release coating on both sides in a striped pattem with adhesive stripes 1 25/64" wide running in the machine direction separated by lanes 5/32" wide of non adhesive coated web running in the machine direction. Cooling is provided to reduce the hot melt temperature before laminating the peelable film facestock. Line speed control is important since it helps determine coat weight. This laminate of film/adhesive/liner was adhesive coated a second time. Adhesive is die coated directly on the film completely covering this side with adhesive before cooling and winding. The wound roll is slit down into multiple cuts. The knives were set to slit down the centers of the non-adhesive coated stripes. The end result is a two side pressure sensitive adhesive coated tape on a liner with and non adhesive coated stripe approximately 1/16" wide running down both edges of the tape.

In the following Examples, the procedure is as described in Example 1 including the adhesive application. The following Examples provide the compositions of the peelable closure.

### Example 2

A two layer coextruded peelable film is prepared as described in Example 1 with the following composition.

| **White Peelable layer** | |
|---|---|
| Union Carbide 5A97, 4MF, Homopolypropylene | 70% |
| Schulman Polybatch P8555-SD, Titanium dioxide concentrate in Homopolypropylene carrier (previously dried at 225 F for 4 hours) | 30% |
| Layer Thickness (mils) | 2.0 |

| **Clear Peelable Layer** | |
|---|---|
| Huntsman PE1017 Low density polyethylene | 80% |
| Lyondell M6060 High density polyethylene | 20% |
| Layer Thickness (mils) | 1.5 |

### Example 3

A two layer coextruded peelable film is prepared as described in Example 1 with the following composition.

| **White Peelable layer** | |
|---|---|
| CEFOR™ resin SRD4-105 | 70% |
| Schulman Polybatch P8555-SD, Titanium dioxide concentrate in Homopolypropylene carrier (previously dried at 225 F for 4 hours) | 30% |
| Layer Thickness (mils) | 2.0 |

| **Clear Peelable Layer** | |
|---|---|
| Huntsman PE1017 Low density polyethylene | 80% |
| Lyondell M6060 High density polyethylene | 20% |
| Layer Thickness (mils) | 1.5 |

### Example 4

A two layer coextruded peelable film is prepared as described in Example 1 with the following composition.

| **White Peelable layer** | |
|---|---|
| Nylon 6 | 70% |
| Schulman Polybatch P8555SD, Titanium dioxide concentrate in Homopolypropylene carrier (previously dried at 225 F for 4 hours) | 30% |
| Layer Thickness (mils) | 2.0 |

| **Clear Peelable Layer** | |
|---|---|
| Huntsman PE1017 Low density polyethylene | 80% |
| Lyondell M6060 High density polyethylene | 20% |
| Layer Thickness (mils) | 1.5 |

### Example 5

A three layer,non-oriented coextruded peelable film is manufactured in a cast sheet operation which is in line stretched in the machine direction to produce a four mil film of the following composition.

| **Print Skin** | |
|---|---|
| Union Carbide 5A97, 4MF, Homopolypropylene | 50% |
| Equistar UE 631-04, Ethylenevinylacetate | 50% |
| Layer Thickness (mils) | 0.5 |

| **Clear Peelable layer** | |
|---|---|
| Eastman PETG 6763 | 90% |
| Huntsman PE1017 | 10% |
| Layer Thickness (mils) | 2.0 |

| **Clear Peelable Layer** | |
|---|---|
| Huntsman PE1017 Low density polyethylene | 80% |
| Lyondell M6060 High density polyethylene | 20% |
| Layer Thickness (mils) | 2 |

In Fig. 3, illustrates a cross sectional view of the closure. Closure 30 has first layer 31 and second layer 32 peelably attached at separation interface 36. On the surface of layer 31 and layer 32 is bonded pressure sensitive adhesive 34. The pressure sensitive adhesive covers all but a portion of the surface. This portion is non-bonding to the container. The adhesive is releasably bonded to a silicone release liner 35. It is believed that this non-bonding portion of the surface affects the directional peelability of the closure. It is believed that a vacuum forms between the peelable layers at the separation interface. This vacuum is believed to increase the force needed to begin peeling. On the portions of the closure where the bonding material covers polymer layers. This bonded edge provides easy separation and opening of the closure along the separation interface. Since the force to start the peel is applied at the edge, air can enter as the separation interface is peeled. A thumbnail is sufficient to begin the opening of the closure.

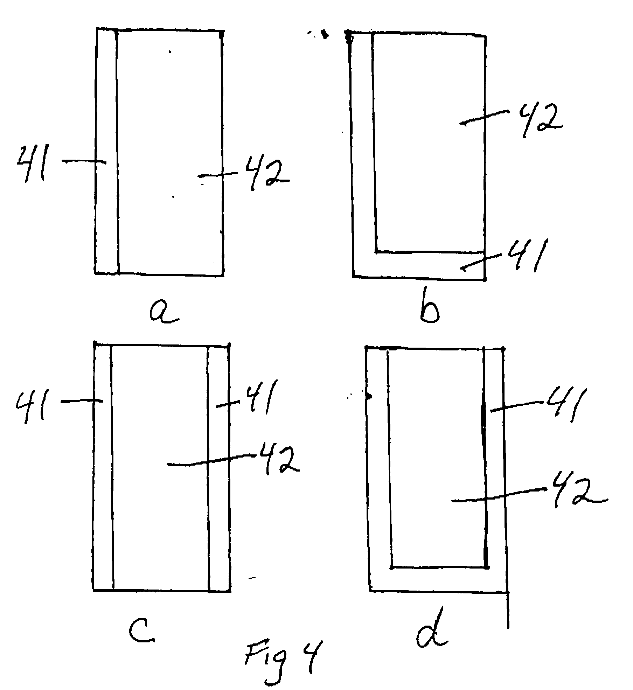

In Fig. 4a-d, the distribution of the bonding material is illustrated. In Figs. 4a-4d, the bonding material 42 covers all of the closure surface except non-bonding zone 41.

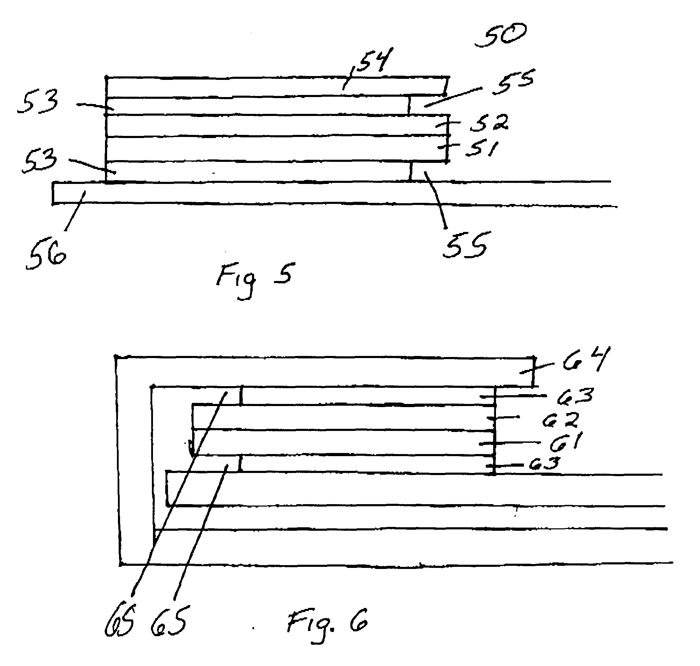

The closures of the present invention are used to seal containers. The containers may be envelopes, boxes, plastic food containers, medical trays, pouches, etc. In Fig. 5, a container flap 56 is bonded to a closure. The closure is bonded to flap 56 by adhesive 53. The closure is composed of first layer 51 and second layer 52. The second layer 52 is bonded to adhesive 53 and release liner 54. The closure has non-bonding zone 55.

In Fig. 6, the closure has been folded over and has sealed the container. Adhesive 63 seals the flap 64 of the container. By the placement of non-bonding zone 65, the contents of the container push against the closure at a point distant from the edge of the separation interface of the closure. However, when the container is to be opened, flap 64 is pulled and the closure easily peels along its separation interface.

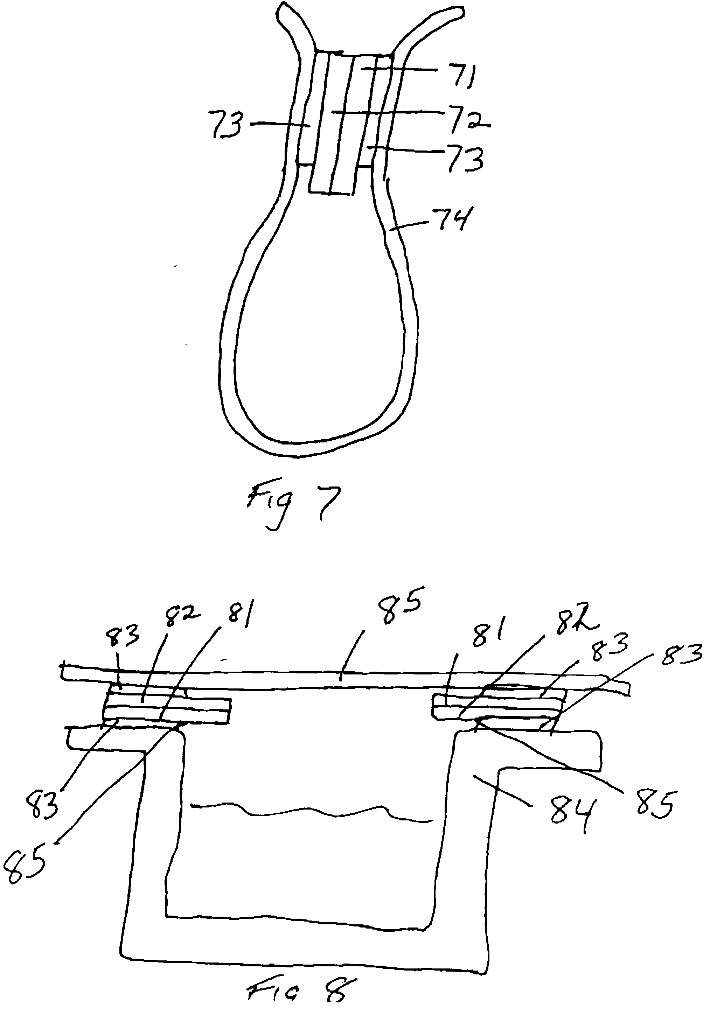

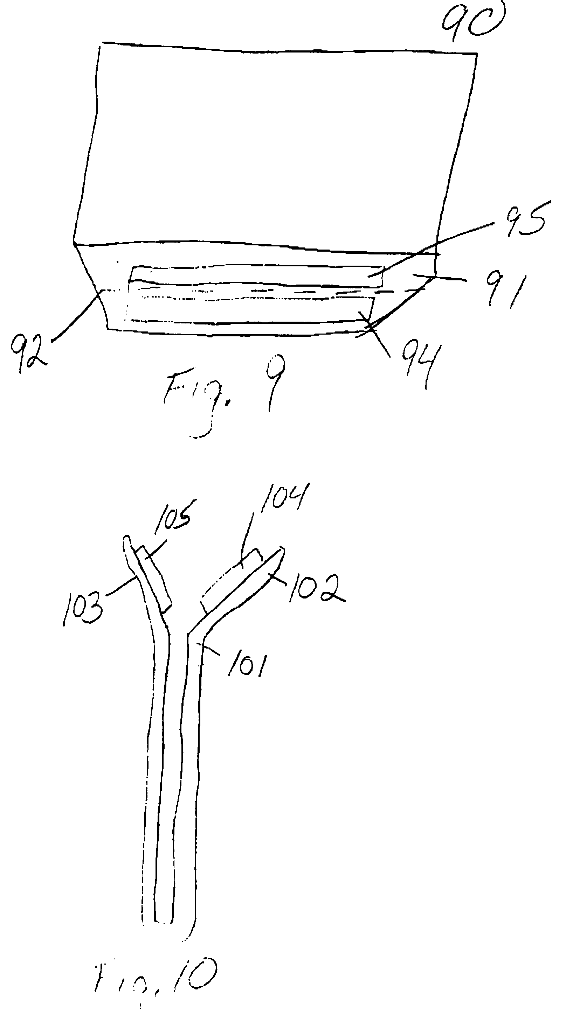

In Fig. 7, an alternative container, bag 74, is sealed with a closure. The closure may be bonded to the bag by adhesive or heat seal material 73. A non-bonding portion of the closure is shown so that the force of the bag contents is distant 75 from the separation 76.

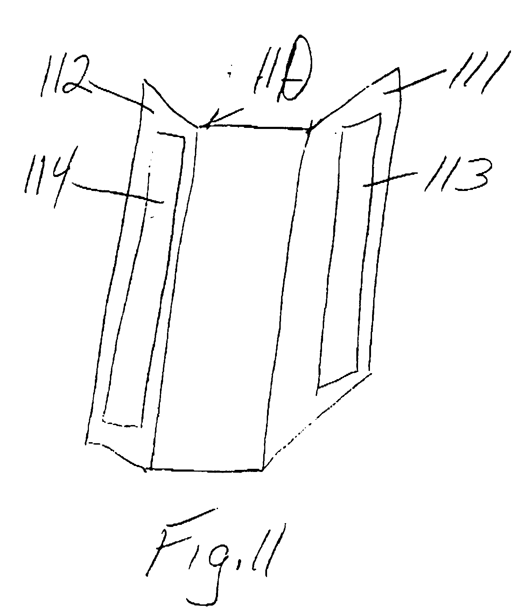

In Fig. 8, a container such as those used for food products, like applesauce or pudding is sealed with a closure. A closure is formed into a gasket and adhered to the container 83 by heat sealing or adhesive. The closure is bonded to the lid which any lid such as plastic or foil. The closure has a non-bonding zone so that the force of the container contents is applied distant from the separation interface or at junction 85.

In another embodiment, the closure is used on a reusable container. A reusable container may be used to or more times. The term reusable refers to container which are may be resealed and used at least another time. The resealable container may be illustrated by Fig. 9. In Fig. 9 container 90 has a flap 91 which is optionally perforated at 92 to provide a means for reuse. The flap is divided into two sections each of which has a closure bonded thereto. At the first use, the container is sealed with the closure 94. After transport, peelable closure 94 is opened. On second use closure 95 is used to reseal and reuse the container. In this embodiment a perforation 92 can be used optionally to shorten the flap after its first use. The shorter flap is preferred for automated sorting.

In another embodiment, in Fig. 9, envelope 101 has flaps 102 and 103. Closures 104 and 105 are bonded to flaps 102 and 103 respectively. On the first use of envelope 10, flap 103 is tucked into the envelope and flap 102 with closure 104 is used to seal the envelope. Upon second use flap 103 with closure 105 seals the envelope and flap 102 with a portion of closure 104 is tucked into envelope 100.

In current art a permanent closure tape is used to bond one flap of the box to the other. A tear strip is provided to open the box, but this mechanism is destructive and renders the box unusable for a second use. Use of a perforated flap as described above weakens the box flap and is therefore only practical for shipping light objects. In this invention a directionally peelable tape is dispensed onto both flaps of the box. In the first use one tape is exposed through removal of the release liner covering the pressure sensitive ADH. When the box is opened it is peelable along the separation interface and one layer each of the film stays with each flap of the box. Unlike the tear strip opening feature which destroys the box, this invention does not. In fact the film layers actually reinforce the box flaps. On the second use the release liner is peeled off the second tape exposing the pressure sensitive adhesive. With both flaps of the box still intact the integrity of the box to hold heavy contents remains the same for second use.

In other shipping applications tear resistant envelopes are often used. An example would be ovemight delivery envelopes made from non-woven materials such as DuPont Tyvek. The Tyvek envelope offers advantages of durability, but cannot be opened easily. Tear strips and perforations cannot be used and most overnight envelopes of this type used today have no suggested opening system.

This invention solves this problem by creating a directionally peelable seal that can open independently of the package to which it is applied. The opening feature of this invention does not rely on tearing the Tyvek material.

A reusable box is illustrated in Fig. 11. Box 111 has flap 111 bonded to closure 113 and flap 112 bonded to closure 114. In first use flap 111 and closure 113 are used to seal the envelope. Flap 112 is folded under. For its second use box 111 is sealed by flap 112 and closure 114 during second use flap 111 with a portion of closure 113 is folded under into the box.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A closure with a directionally peelable opening feature for articles comprising first and second layer of different polymeric films, wherein each layer has an upper and lower surface, the upper surface of the first layer is peelably attached to the lower surface of the second layer at a separation interface, provided that when the closure is used to secure an article, at least one portion of the upper surface of the first layer or the lower surface of the second layer is not attached to the container.

2. The closure of claim 1 wherein the films of the first and second layers have been uniaxially oriented.

3. The closure of claim 1 wherein the separation interface between the skin and base layers has a peel strength in the range of about 30 to about 400 grams per 2-inch width at 90□ peel.

4. The closure of claim one wherein the separation interface between the skin and base layers has a peel strength in the range of about 30 to about 400 grams per 1-inch width at 90□ peel.
The closure of claim 1 wherein the first and second layer are polyolefin layers.

5. The closure of claim 1 wherein the first layer is derived from a polyolefin, and second layer is derived from a styrene, a vinyl polymer, a polyurethane, an acrylic polymer, or a nylon.

6. The closure of claim 1 wherein the first and second layers are each independently composed of polyethylene, polypropylene, polypropylene copolymers or mixtures thereof.

7. The closure of claim 1 wherein the lower surface and the upper surface of the first and second layer are bonded to a pressure sensitive adhesive, wherein a portion near one edge of one of the first or second layer is free of adhesive.

8. The closure of claim 1 wherein the lower surface of the first layer and the upper surface of the second layer are bonded to a heat sealable material, wherein a portion near one edge of the first or second layer is free of heat sealable material.

9. A directionally peelable closure for articles comprising first and second layer of different polyolefin films, wherein each layer has an upper and lower surface, the upper surface of the first layer is peelably attached to the lower surface of the second layer at a separation interface and wherein the separation interface between the skin and base layers has a peel strength in the range of about 30 to about 400 grams per 1-inch width at 90□ peel, provided that when the closure is used to secure an article, at least one portion of the upper surface of the first layer or the lower surface of the second layer is not attached to the container.

10. The closure of claim 9 wherein the first and second layers are each independently composed of polyethylene, polypropylene, polypropylene copolymers or mixtures thereof.

11. The closure of claim 9 further comprising a release liner on the lower surface of the adhesive layer.

12. The closure of claim 9 wherein the lower surface and the upper surface of the first and second layer are bonded to a pressure sensitive adhesive, wherein a portion near one edge of one of the first or second layer is free of adhesive.

13. The closure of claim 9 wherein the lower surface and the upper surface of the first and second layer are bonded to a heat sealable material, wherein a portion near one edge of one of the first or second layer is free of heat sealable material.

14. A container sealed with a directionally peelable closure, comprising an article which is articulated to provide for sealing with a closure and a closure adhered to article wherein the closure comprises a first and second layer of different polymeric films, wherein each layer has an upper and lower surface, the upper surface of the first layer is peelably attached to the lower surface of the second layer at a separation interface, and having at least portion of the upper surface of the first layer or the lower surface of the second layer which is not adhered to the container, wherein the force of the container contents is applied distant from the edge of the separation interface.

15. The container of claim 14 wherein the container is an envelope with a sealing flap and the closure is attached to the flap or the envelope which the flap covers.

16. The container of claim 14 wherein the portion of the closure to sealing flap is not secured to the envelope.

17. The container of claim 14 wherein the container is a box with at least one sealing flap and the closure is attached to the sealing flap or the portion of the box which is covered by the sealing flap.

18. The container of claim 14 wherein the portion of the closure to the sealing flap is not secured to the box.

19. A reusable directionally sealed container comprising a container with two sealing means and two closures which are directionally peelable each closure is positioned on the container to contact a sealing means and wherein the closure comprises a first and second layer of different polymeric films, wherein each layer has an upper and lower surface, the upper surface of the first layer is peelably attached to the lower surface of the second layer at a separation interface, and having at least portion of the upper surface of the first layer or the lower surface of the second layer is not adhered to the container, and wherein the force of the container contents is applied distant from the edge of the separation interface.

20. The container of claim 18 wherein the sealing means are flaps.

21. The container of claim 18 wherein sealing means provides for consecutive sealing of the container.
